# EUROPEAN PATENT APPLICATION

(11) **EP 4 428 505 A1**
(43) Date of publication of application: **11.09.2024**
(21) Application number: 23275039.8
(22) Date of filing: 10.03.2023
(51) Int. Cl.: G01H 9/00, H04B 10/077

(54) **APPARATUS AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An optical communication system 4 comprising:
an optical transmitter 41 and an optical receiver 42 mutually optically coupled via an optical fibre cable assembly 43 comprising an optical fibre cable 431 and a set of optical circuits 432, including a first optical circuit 432A comprising a first optical isolator 432A1, wherein the optical transmitter 41 is configured to transmit an optical signal S to the optical receiver 42 via the optical fibre cable assembly 43, wherein the optical receiver 42 is configured to receive the optical signal S transmitted by the optical transmitter 41 via the optical fibre cable assembly 43 and wherein the set of optical circuits 432 is disposed to section the optical fibre cable 431 into a series of optical fibre cable sections 4311, including a first section 4311A and a second section 4311B; and
a set of distributed acoustic sensing, DAS, circuits 44, including a first DAS circuit 44A, wherein the first DAS circuit 44A comprises a first DAS optical transmitter 44A1, a first DAS multiplexer / de-multiplexer 44A2 and a first DAS optical receiver 44A3;
wherein the first DAS optical transmitter 44A1 is configured to transmit a first DAS optical signal s1 to the first DAS optical receiver 44A3 via the first section 4311A or the second section 4311B of the optical fibre cable 431 and via the first DAS multiplexer / de-multiplexer 44A2.

## Description

### FIELD

The present invention relates to optical cables.

### BACKGROUND

The global internet is heavily reliant on undersea fibre optic cables (also known as optical fibre cables). In 2017, it was estimated that 97% of all internet and telecommunication traffic moved through undersea fibre optic cables. This heavy reliance on undersea fibre optic cables, in addition to the network of undersea power cables, makes undersea infrastructure critical to the security and economies of countries across the world.

The threat posed by the ability of adversary forces to disrupt the global economy is significant, and there have been recent examples, for example in the sabotage of the Nord Stream pipelines in September 2022. It is critical for countries to use technology to monitor activity on and around undersea fibre optic cables in order to provide an early warning and localisation of the threats such that mediating action can be taken. Protecting this infrastructure is of existential importance to Western and NATO nations.

Hence, there is a need to improve monitoring of fibre optic cables.

### SUMMARY

According to a first aspect of the present invention, there is provided an optical communication system comprising:
an optical transmitter and an optical receiver mutually optically coupled via an optical fibre cable assembly comprising an optical fibre cable and a set of optical circuits, including a first optical circuit comprising a first optical isolator, wherein the optical transmitter is configured to transmit an optical signal to the optical receiver via the optical fibre cable assembly, wherein the optical receiver is configured to receive the optical signal transmitted by the optical transmitter via the optical fibre cable assembly and wherein the set of optical circuits is disposed to section the optical fibre cable into a series of optical fibre cable sections, including a first section and a second section; and
a set of distributed acoustic sensing, DAS, circuits, including a first DAS circuit, wherein the first DAS circuit comprises a first DAS optical transmitter, a first DAS multiplexer / de-multiplexer and/or a first DAS circulator and a first DAS optical receiver;
wherein the first DAS optical transmitter is configured to transmit a first DAS optical signal to the first DAS optical receiver via the first section or the second section of the optical fibre cable and via the first DAS multiplexer / de-multiplexer and/or the first DAS circulator.

According to a second aspect of the present invention, there is provided an optical circuit comprising an optical isolator and a distributed acoustic sensing, DAS, circuit comprising a DAS optical transmitter and/or a DAS optical receiver and a DAS multiplexer / de-multiplexer and/or a DAS circulator.

According to a third aspect of the present invention, there is provided a method of monitoring an optical fibre cable assembly, the method comprising:
transmitting, by an optical transmitter, an optical signal to an optical receiver via the optical fibre cable assembly comprising an optical fibre cable and a set of optical circuits, including a first optical circuit comprising a first optical isolator, wherein the set of optical circuits is disposed to section the optical fibre cable into a series of optical fibre cable sections, including a first section and a second section;
receiving, by the optical receiver, the optical signal transmitted by the optical transmitter via the optical fibre cable assembly;
transmitting, by a first distributed acoustic sensing, DAS, optical transmitter included in a first DAS circuit of a set of DAS circuits, wherein the first DAS circuit comprises the first DAS optical transmitter, a first DAS multiplexer/ de-multiplexer and/or a first DAS circulator and a first DAS optical receiver, a first DAS optical signal to the first DAS optical receiver via the first section or the second section of the optical fibre cable and via the first DAS multiplexer / de-multiplexer and/or the first DAS circulator; and
receiving, by the first DAS optical receiver, the first DAS optical signal.

### DETAILED DESCRIPTION

According to a first aspect of the present invention, there is provided an optical communication system comprising:
an optical transmitter and an optical receiver mutually optically coupled via an optical fibre cable assembly comprising an optical fibre cable and a set of optical circuits, including a first optical circuit comprising a first optical isolator, wherein the optical transmitter is configured to transmit an optical signal to the optical receiver via the optical fibre cable assembly, wherein the optical receiver is configured to receive the optical signal transmitted by the optical transmitter via the optical fibre cable assembly and wherein the set of optical circuits is disposed to section the optical fibre cable into a series of optical fibre cable sections, including a first section and a second section; and
a set of distributed acoustic sensing, DAS, circuits, including a first DAS circuit, wherein the first DAS circuit comprises a first DAS optical transmitter, a first DAS multiplexer / de-multiplexer and/or a first DAS circulator and a first DAS optical receiver;
wherein the first DAS optical transmitter is configured to transmit a first DAS optical signal to the first DAS optical receiver via the first section or the second section of the optical fibre cable and via the first DAS multiplexer / de-multiplexer and/or the first DAS circulator.

In this way, distributed acoustic sensing is provided along the along the first section or the second section of the optical fibre cable. In this way, distributed acoustic sensing may be provided along the full length (i.e. all the sections) of the optical fibre cable, by including DAS circuits for every section, for example. In this way, monitoring, by distributed acoustic sensing, may be provided for amplified optical fibre cables used for international telecommunications. In contrast, conventional DAS solutions for distributed sensing in optical fibre cables depend on the detection of backscattered light which is blocked or corrupted by components in the optical fibre cables, such as optical isolators. Furthermore, as the signal propagates along the optical fibre cables, the magnitude of the DAS signals diminishes due to attenuation and other loss mechanisms, limiting the effective usable range of conventional DAS solutions to about 50 km from the terminal.

Conventional optical communication systems (also known as optical telecommunication systems or optical network systems) are known.

The optical communication system comprises the optical transmitter and the optical receiver mutually optically coupled via (i.e. by) the optical fibre cable assembly. Generally, an optical communication system uses an optical transmitter to encode a message into an optical signal and transmit the optical signal, a channel (e.g. an optical fibre cable) to carry the optical signal and an optical receiver to receive and decode the message from the received optical signal. Suitable optical transmitters and optical receivers are known. The optical transmitter is configured to transmit the optical signal to the optical receiver via (i.e. though) the optical fibre cable assembly. The optical receiver is configured to receive the optical signal transmitted by the optical transmitter via the optical fibre cable assembly. In one example, the optical transmitter and the optical receiver are unidirectionally mutually optically coupled via the optical fibre cable assembly. In one example, the optical transmitter and the optical receiver are bidirectionally mutually optically coupled via the optical fibre cable assembly. It should be understood that the optical transmitter and the optical receiver may be bidirectionally mutually optically coupled via the optical fibre cable assembly even though the optical fibre cable assembly includes the first optical isolator, as described below in more detail. In one example, a wavelength of the optical signal is in the S-band (i.e. in a wavelength range from 1460 nm to 1530 nm), C-band (i.e. in a wavelength range from 1530 nm to 1565 nm) or L-band (i.e. in a wavelength range from 1565 nm to 1625 nm). The optical fibre cable assembly comprises the optical fibre cable and the set of optical circuits (also known as nodes). Suitable optical fibre cables are known. The set of optical circuits is disposed to section (i.e. partition, divide) the optical fibre cable into the series of optical fibre cable sections (i.e. partitions, divisions), including the first section and the second section. It should be understood that the first section and the second section are disposed in series (i.e. serially disposed, arranged in tandem, adjacent end to end c.f. disposed in parallel). In one example, the first section and the second section are mutually optically coupled via the first optical circuit. That is, the first section and the second section are in optical communication via the first optical circuit. In one example, the series of optical fibre cable sections are mutually optically coupled via the set of optical circuits. In one example, the set of optical circuits includes M optical circuits, including the first optical circuit, wherein M is a natural number greater than or equal to 1, for example 1, 2, 3, 4, 5, 6, 7, 8, 9, 10, 20, 30, 40, 50, 60, 70, 80, 90, 100 or more, disposed to section the optical fibre cable into the series of N optical fibre cable sections, including the first section and the second section, wherein N is a natural number greater than or equal to 2, for example 2, 3, 4, 5, 6, 7, 8, 9, 10, 20, 30, 40, 50, 60, 70, 80, 90, 100 or more. In one example, N is greater than M. In one example, N = M + 1. In one example, M is in a range from 1 to 1,000, preferably in a range from 2 to 750, more preferably in a range from 3 to 500. In one example, N is in a range from 2 to 1,001, preferably in a range from 3 to 751, more preferably in a range from 4 to 501. In one example, the first section has a length in a range from 10 km to 100 km, preferably in a range from 25 km to 75 km, more preferably in a range from 40 km to 60 km, for example 50 km. The second section (more generally each section) may be as described with respect to the first section.

The set of optical circuits includes the first optical circuit comprising the first optical isolator (also known as an optical diode). It should be understood that the first optical isolator allows transmission of optical signals in only one direction (i.e. unidirectionally). Typically, an optical isolator is used to prevent unwanted feedback, such as back reflections or signals that may occur after the optical isolator, into an optical oscillator, such as a laser cavity. Back reflections can damage a laser source or cause the laser source to mode hop, amplitude modulate, or frequency shift, for example. Back reflections can additionally and/or alternatively provide amplification wavelength sensitivity in the amplifiers or even cause them to oscillate (turn them into lasers), preventing their amplifying signals correctly. Typically, optical isolator are passive magneto-optic devices. That is, the first optical isolator would preclude use of conventional DAS, since the first optical isolator would otherwise prevent backscattering of the DAS optical signal, that is required for DAS.

The optical communication system comprises the set of distributed acoustic sensing, DAS, circuits, including the first DAS circuit, wherein the first DAS circuit comprises the first DAS optical transmitter, the first DAS multiplexer / de-multiplexer and/or a first DAS circulator and the first DAS optical receiver. Suitable DAS optical transmitters, DAS multiplexer / de-multiplexers, DAS circulators and DAS optical receivers are known. In one example, the first DAS multiplexer / de-multiplexer comprises and/or is a dichroic filter, an arrayed waveguide grating (AWGN), a chromatic prism or a simple optical filter arrangement. Other DAS multiplexer / de-multiplexers are known.

The first DAS optical transmitter is configured to transmit the first DAS optical signal to the first DAS optical receiver via (i.e. through) the first section or the second section of the optical fibre cable and via the first DAS multiplexer / de-multiplexer and/or the first DAS circulator. In this way, the first DAS optical signal is transmitted by the first DAS optical transmitter through the first section or the second section of the optical fibre (i.e. upstream or downstream of the first optical circuit) to the first DAS optical receiver, for monitoring of the respective section using DAS. In one example, respective wavelengths of the first optical signal and of the first DAS optical signal are mutually different. In this way, the first optical signal and the first DAS optical signal may be mutually discriminated. In one example, a wavelength of the first optical signal is inside the S-band, the C-band or the L-band and a wavelength of the first DAS optical signal is outside the S-band, the C-band or the L-band, respectively, for example 1480 nm, 1510 nm or 1610 nm. In one example, respective polarisations of the first optical signal and of the first DAS optical signal are mutually different, for example mutually orthogonal. In this way, the first optical signal and the first DAS optical signal may be mutually discriminated. In one example, the first transmitter and the first DAS transmitter are configured to transmit the first optical signal and the first DAS optical signal asynchronously, for example at different times such as during scheduled gaps in data transfer using the optical signal. In one example, the first DAS optical transmitter is configured to transmit the first DAS optical signal to the first DAS optical receiver unidirectionally via the first section or the second section of the optical fibre cable and via the first DAS multiplexer / de-multiplexer and/or the first DAS circulator. In this way, the first section or the second section of the optical fibre may be monitored unidirectionally by DAS. For example, the DAS optical transmitter may be disposed with the optical transmitter and the DAS optical receiver may be disposed with and/or included in the first optical circuit or vice versa. For example, the DAS optical transmitter may be disposed with the optical receiver and the DAS optical receiver may be disposed with and/or included in the first optical circuit or vice versa. For example, the DAS optical transmitter may be disposed with and/or included in the first optical circuit and the DAS optical receiver may be disposed with and/or included in a second optical circuit or vice versa. In one example, the first DAS optical transmitter is configured to transmit the first DAS optical signal to the first DAS optical receiver bidirectionally via the first section or the second section of the optical fibre cable and via the first DAS multiplexer / de-multiplexer and/or the first DAS circulator. For example, the first DAS optical transmitter and the first DAS optical receiver may be disposed with the optical transmitter, the optical transmitter or with and/or included in the first optical circuit. In this way, the first section or the second section of the optical fibre may be monitored bidirectionally by DAS. In one example, the first DAS circuit comprises a first retroreflector (also known as a retroflector or a cataphote), configured to reflect the first DAS optical signal, transmitted by the first DAS optical transmitter via (i.e. through) the first section or the second section of the optical fibre cable, to the first DAS optical receiver via the first section or the second section of the optical fibre cable. For example, the first DAS optical transmitter and the first DAS optical receiver may be disposed with the optical transmitter or with the optical transmitter and the first retroflector disposed with and/or included in the first optical circuit or vice versa. For example, the first DAS optical transmitter and the first DAS optical receiver may be disposed with and/or included in the first optical circuit and the first retroflector disposed with and/or included in a second optical circuit or vice versa. In this way, the first section or the second section of the optical fibre may be monitored bidirectionally by DAS.

In one example, the first optical circuit comprises the first DAS multiplexer / de-multiplexer and/or the first DAS circulator. In this way, the first DAS multiplexer / de-multiplexer and/or the first DAS circulator is comprised in the first optical circuit, between the first section and the second section of the optical cable.

In one example, the first DAS multiplexer / de-multiplexer comprises and/or is a wavelength-division multiplexer / de-multiplexer. Suitable wavelength-division multiplexers / de-multiplexers are known.

In one example, the first DAS multiplexer / de-multiplexer comprises and/or is a polarization-division multiplexer / de-multiplexer. Suitable polarization-division multiplexers / de-multiplexers are known.

In one example, the first DAS multiplexer / de-multiplexer comprises and/or is a time-division multiplexer / de-multiplexer. Suitable time-division multiplexers / de-multiplexers are known.

In one example, the first optical circuit comprises the first DAS optical transmitter and/or the first DAS optical receiver. In this way, the first DAS optical transmitter and/or the first DAS optical receiver is comprised in the first optical circuit, between the first section and the second section of the optical cable.

In one example, the first optical circuit comprises a first DAS retroreflector. In this way, the first DAS retroreflector is comprised in the first optical circuit, between the first section and the second section of the optical cable.

In one example, the first optical circuit comprises a first optical amplifier. Suitable optical amplifiers are known. In one example, the first optical isolator is disposed (i.e. arranged or used) to protect the first optical amplifier (such as upstream or downstream thereof appropriately), as understood by the skilled person.

In one example, the first optical circuit comprises a first multiplexer / de-multiplexer disposed upstream or downstream of the first optical isolator, for example for multiplexing / de-multiplexing the first optical signal for optical amplification by a first optical amplifier. In one example, the first multiplexer / de-multiplexer comprises and/or is a dichroic filter, an arrayed waveguide grating (AWGN), a chromatic prism or a simple optical filter arrangement. Other multiplexer / de-multiplexers are known.

In one example, the first DAS optical transmitter is configured to transmit the first DAS optical signal, for example only the first DAS optical signal (i.e. excluding the first optical signal), to the first DAS optical receiver via the first section or the second section of the optical fibre cable, via the first multiplexer / de-multiplexer and via the first DAS multiplexer / de-multiplexer and/or the first DAS circulator. For example, for unidirectional DAS monitoring, the first DAS optical signal may be transmitted through the first multiplexer / de-multiplexer and subsequently through the first DAS multiplexer / de-multiplexer and/or the first DAS circulator to the first DAS receiver. For example, for bidirectional DAS monitoring, the first DAS optical signal may be transmitted through the first multiplexer / de-multiplexer and subsequently through the first DAS multiplexer / de-multiplexer and/or the first DAS circulator to a first DAS retroreflector and then back through the first DAS multiplexer / de-multiplexer and subsequently back through the first multiplexer / de-multiplexer to the first DAS receiver.

In one example, the first optical circuit comprises a first supervisory circuit or part thereof. Suitable supervisory circuits are known. In one example, the first supervisory circuit comprises a first supervisory optical transmitter and/or a first supervisory optical receiver, wherein the first supervisory optical transmitter is configured to transmit a first supervisory optical signal to the first supervisory optical receiver via the first section or the second section and via the first multiplexer / de-multiplexer and optionally, via the first DAS multiplexer / de-multiplexer. In this way, supervisory optical signals may be communicated via the optical fibre cable assembly, as understood by the skilled person. In one example, respective wavelengths of the first DAS optical signal and of the first supervisory optical signal are mutually different. In this way, the first DAS optical signal and the first supervisory optical signal may be mutually discriminated. In one example, the first supervisory transmitter and the first DAS transmitter are configured to transmit the first supervisory signal and the first DAS optical signal asynchronously, for example at different times such as during scheduled gaps in the first supervisory optical signal. In one example, respective wavelengths of the first optical signal and of the first supervisory optical signal are mutually different. In this way, the first optical signal and the first supervisory optical signal may be mutually discriminated. In one example, a wavelength of the first optical signal is inside the S-band, the C-band or the L-band and a wavelength of the first supervisory signal is outside the S-band, the C-band or the L-band, respectively, for example 1480 nm, 1510 nm or 1610 nm.

In one example, the first DAS multiplexer / de-multiplexer and/or the first DAS circulator is disposed upstream (for example, for the first section) or downstream (for example, for the second section) of the first supervisory circuit or part thereof.

In one example, the first DAS multiplexer / de-multiplexer is disposed between the first multiplexer / de-multiplexer and the first supervisory receiver. In this way, the first de-multiplexer separates the communications channels (i.e. demultiplexes the first optical signal) and passes the first DAS optical signal and the first the first supervisory optical signal in the same direction while the first DAS de-multiplexer separates the first DAS optical signal from the first supervisory signal, which passes through the first DAS de-multiplexer while the first DAS optical signal is directed to the first DAS receiver or the first DAS retroreflector.

In one example, the set of DAS circuits includes a second DAS circuit, wherein the second DAS circuit comprises a second DAS optical transmitter, a second DAS multiplexer / de-multiplexer and/or a second DAS circulator and a second DAS optical receiver;
wherein the first DAS optical transmitter is configured to transmit the first DAS optical signal to the first DAS optical receiver via the first section of the optical fibre cable and via the first DAS multiplexer / de-multiplexer and/or the first DAS circulator; and
wherein the second DAS optical transmitter is configured to transmit a second DAS optical signal to the second DAS optical receiver via the second section of the optical fibre cable and via the second DAS multiplexer / de-multiplexer and/or the second DAS circulator.

The second DAS circuit may be as described with respect to the first DAS circuit mutatis mutandis. Each DAS circuit may be as described with respect to the first DAS circuit mutatis mutandis.

In one example, respective wavelengths of the first DAS optical signal and of the second DAS optical signal are mutually different. In this way, the first DAS optical signal and the second DAS optical signal may be mutually discriminated.

According to the second aspect of the present invention, there is provided an optical circuit comprising an optical isolator and a distributed acoustic sensing, DAS, circuit comprising a DAS optical transmitter and/or a DAS optical receiver and a DAS multiplexer / de-multiplexer and/or a DAS circulator.

The optical isolator, the DAS circuit, the DAS optical transmitter, the DAS optical receiver, the DAS multiplexer / de-multiplexer and/or the DAS circulator may be as described with respect to the first aspect mutatis mutandis.

In one example, the optical circuit comprises an optical amplifier, a multiplexer / de-multiplexer and/or a supervisory circuit or part thereof. The optical amplifier, the multiplexer / de-multiplexer and/or the supervisory circuit mutatis mutandis.

According to the third aspect of the present invention, there is provided a method of monitoring an optical fibre cable assembly, the method comprising:
transmitting, by an optical transmitter, an optical signal to an optical receiver via the optical fibre cable assembly comprising an optical fibre cable and a set of optical circuits, including a first optical circuit comprising a first optical isolator, wherein the set of optical circuits is disposed to section the optical fibre cable into a series of optical fibre cable sections, including a first section and a second section;
receiving, by the optical receiver, the optical signal transmitted by the optical transmitter via the optical fibre cable assembly;
transmitting, by a first distributed acoustic sensing, DAS, optical transmitter included in a first DAS circuit of a set of DAS circuits, wherein the first DAS circuit comprises the first DAS optical transmitter, a first DAS multiplexer/ de-multiplexer and/or a first DAS circulator and a first DAS optical receiver, a first DAS optical signal to the first DAS optical receiver via the first section or the second section of the optical fibre cable and via the first DAS multiplexer / de-multiplexer and/or the first DAS circulator; and
receiving, by the first DAS optical receiver, the first DAS optical signal.

The optical fibre cable assembly, the optical transmitter, the transmitting, the optical signal, the optical receiver, the optical fibre cable, the set of optical circuits, the first optical circuit, the first optical isolator, the series of optical fibre cable sections, the first section, the second section, the receiving, the optical receiver, the first distributed acoustic sensing, DAS, optical transmitter, the first DAS circuit, the set of DAS circuits, the first DAS optical transmitter, the first DAS multiplexer / de-multiplexer, the first DAS circulator, the first DAS optical receiver, the first DAS optical signal and/or the receiving may be as described with respect to the first aspect.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### BRIEF DESCRIPTION OF THE FIGURES

Embodiments of the invention will now be described by way of example only with reference to the figures, in which:
Figure 1 shows a conventional long-distance fibre optical communications link;
Figure 2 shows a simple fibre amplifier design for the conventional long-distance fibre optical communications link of Figure 1;
Figure 3 shows addition and extraction of a supervisory channel for the conventional long-distance fibre optical communications link of Figure 1;
Figure 4 shows transmission and detection of DAS signals, according to an exemplary embodiment; and
Figure 5 shows downstream DAS with a single transmitter at the cable terminal, according to an exemplary embodiment; and
Figure 6 shows a method according to an exemplary embodiment.

### DETAILED DESCRIPTION OF THE FIGURES

Generally, like reference signs indicate like features, description of which is not repeated for brevity.

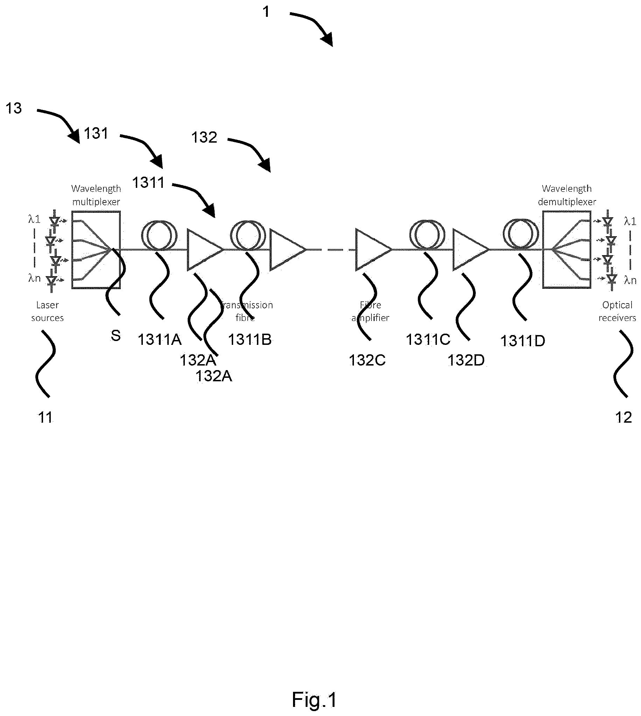

Figure 1 is a schematic of a nominal long-range wavelength division multiplexed fibre optic cabled link. It incorporates a number of channels, each with different wavelengths and modulated with its own data stream. These are multiplexed together and launched into the fibre. For conventional C-band optical amplification, the wavelengths are typically between 1525nm and 1565nm. For L-band optical amplification, the range is extended to include wavelengths from typically 1565nm and 1625nm. Each wavelength channel loses power at it travels along the fibre due to physical scattering and loss mechanisms in the fibre cable. For short links, this loss may be acceptable and enough power will be received at the far end to enable the recovery of the modulated signal. For longer links (beyond ~150km), the loss is too high to enable the effective recovery of the signal and so optical amplifiers are placed at intervals along the fibre to maintain the optical power. These intervals are typically no greater than 100km. At the receiver end, the wavelengths are de-multiplexed and the signal detected.

It will be appreciated that each cable may contain multiple fibres and amplifiers to increase the overall capacity of any link.

In more detail, a conventional optical communication system 1 comprises:
an optical transmitter 11 and an optical receiver 12 mutually optically coupled via an optical fibre cable assembly 13 comprising an optical fibre cable 131 and a set of optical circuits 132, including a first optical circuit 132A comprising a first optical isolator 132A1 (not shown), wherein the optical transmitter 11 is configured to transmit an optical signal S to the optical receiver 12 via the optical fibre cable assembly 13, wherein the optical receiver 12 is configured to receive the optical signal S transmitted by the optical transmitter 11 via the optical fibre cable assembly 13 and wherein the set of optical circuits 132 is disposed to section the optical fibre cable 131 into a series of optical fibre cable sections 1311, including a first section 1311A and a second section 1311B.

In this example, the optical transmitter 11 and the optical receiver 12 are unidirectionally mutually optically coupled via the optical fibre cable assembly 13. In this example, a wavelength of the optical signal S is in the S-band (i.e. in a wavelength range from 1460 nm to 1530 nm), C-band (i.e. in a wavelength range from 1530 nm to 1565 nm) or L-band (i.e. in a wavelength range from 1565 nm to 1625 nm). In this example, the first section 1311A and the second section 1311B are mutually optically coupled via the first optical circuit 132A.

In this example, the first optical circuit 132A comprises a first optical amplifier 132A2 (not shown). In this example, the first optical isolator 132A1 is disposed to protect the first optical amplifier 132A2.

In this example, the set of optical circuits includes M = 4 optical circuits, including the first optical circuit 132A, a second optical circuit 132B, a third optical circuit 132C and a fourth optical circuit optical circuit 132D (more generally wherein M is a natural number greater than or equal to 1, for example 1, 2, 3, 4, 5, 6, 7, 8, 9, 10, 20, 30, 40, 50, 60, 70, 80, 90, 100 or more), disposed to section the optical fibre cable 131 into the series of N = 5 optical fibre cable sections 1311, including the first section 1311A and the second section 1311B (more generally wherein N is a natural number greater than or equal to 2, for example 2, 3, 4, 5, 6, 7, 8, 9, 10, 20, 30, 40, 50, 60, 70, 80, 90, 100 or more). In this example, N = M + 1.

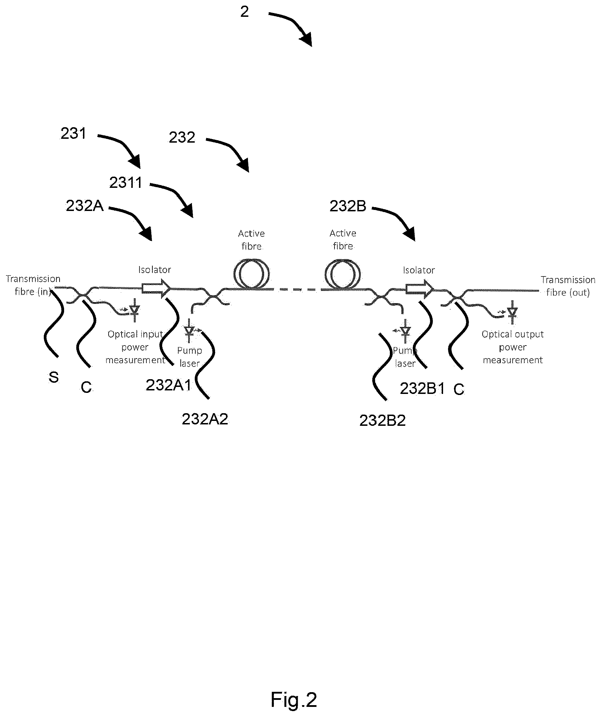

Figure 2 is a schematic for the design for a simple amplifier 232A2, such as the first optical amplifier 132A2, as described previously. It will be appreciated that more complicated amplifier designs including those with a break in the middle to insert optical components exist. Architectures with separate C-band and L-band amplification and those allowing bidirectional transmission are envisaged. Some of these are described and illustrated in [1] for example.

To the left of Figure 2, the signal S is received from the optical fibre cable fibre 231. Typically, a coupler C is used to tap off a small proportion of the energy so that the gain of the amplifier can be monitored. The signal next passes through an optical isolator which allows light to pass forward but not backward. This is needed so that the amplifier cannot oscillate due to stray reflections and to improve the noise figure of the amplifier and thus the overall system performance. The isolators block any signal reflected after them, and therefore prevent DAS from operating through an amplifier. The light passes into the active fibre (typically doped with erbium to provide gain) to which is coupled the pump laser light to activate the gain. The pump lasers are typically high-power lasers at 980nm or 1480nm (for erbium-based amplifiers). The pump laser can propagate forward (which is preferred for low noise), or backward (which is preferred for high output power). After passing through a backward pump laser coupler, and another isolator, a small proportion of the light is coupled out for the gain calculation. The signal(s) then pass on to the next section of transmission fibre.

In more detail, in this example, a conventional first optical circuit 232A, of a conventional optical communication system 2, comprises a first optical isolator 232A1 (i.e. the isolator) and a first optical amplifier 232A2 (i.e. the pump laser). In this example, the first optical isolator 232A1 is disposed to protect the first optical amplifier 232A2. In this example, a conventional second optical circuit 232B comprises a second optical isolator 232B1 and a second optical amplifier 232B2. In this example, the second optical isolator 232B1 is disposed to protect the first optical amplifier 232B2.

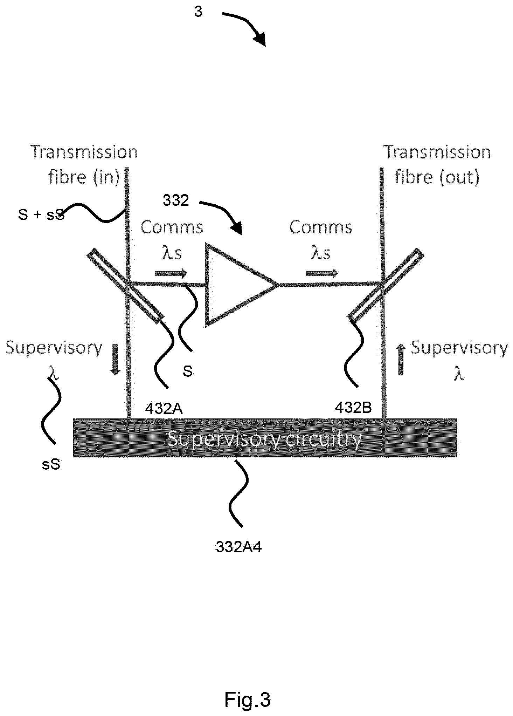

Control and monitoring of the amplifiers is desirable, and this is typically provided on a separate (supervisory) wavelength that is only allowed to propagate between neighbouring amplifiers. The optical structure of the amplifier allowing this is given in Figure 3.

The architecture (i.e. optical circuits 232A, 232B) provided within Figure 2 is represented by the triangle 332 in Figure 3 for a conventional optical communication system 3. To either side of the triangle 332, multiplexers or de-multiplexers 432A, 432B are provided. These could, for example, be dichroic filters, which reflect some wavelengths and transmit others. As shown in Figure 3, the supervisory wavelength sS of a first supervisory circuit or part thereof 332A4 is transmitted and the communications wavelength S are reflected by the dichroic mirror 432A. It will be appreciated the opposite configuration can provide the same function. At each amplifier, the supervisory wavelength sS transmitted at the previous amplifier is detected and its signals received e.g. to configure the amplifier or to pass on to later amplifiers. Similarly, a modulated supervisory wavelength is transmitted to the next amplifier to provide information about the amplifier or to pass on information from earlier in the chain. The communications channels may have wavelengths in C-band (1526 to 1565nm) and/or L-band (1565 to 1625nm). The supervisory wavelength is typically outside this band to enable its separation, and could be for example 1480nm, 1510nm, or 1610nm.

More complex amplifier structures can use a similar approach to drop and add this wavelength as disclosed in [1].

All of the architecture description to this point in this section is disclosed in [1] and exists in the prior art.

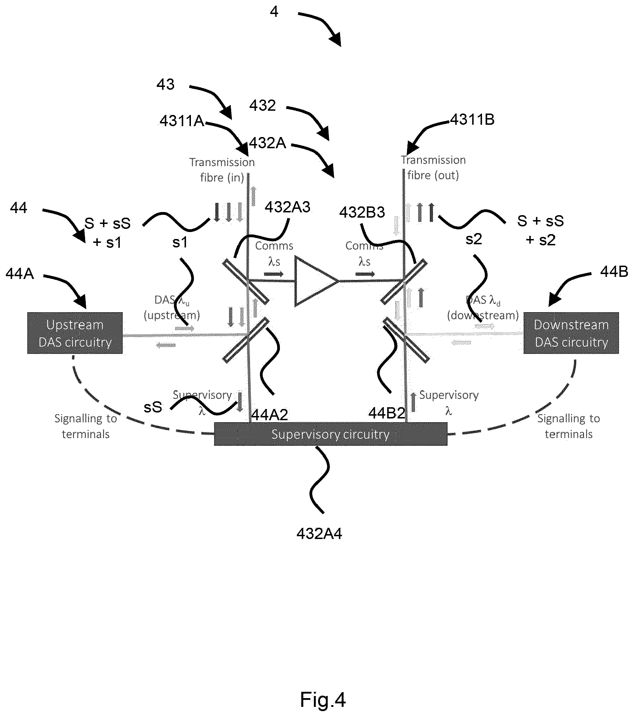

This invention provides for an architecture that allows for the provision of OTDR and DAS signals through the amplifiers. An embodiment of this is shown schematically in Figure 4.

The inventive step here is provide an additional multiplexer / de-multiplexer, for example in the section between the first de-multiplexer and the supervisory channel detector. This separates out the DAS channel which could for example be any of the wavelengths 1480 nm, 1510 nm, or 1610 nm, or at another wavelength that is not used for the supervisory channel, or another wavelength which would otherwise transmit data. For this invention, the first de-multiplexer separates the communications channels and passes the DAS channel in the same direction as the supervisory channel. The second stage separates the DAS and supervisory channels.

In more detail, according to the first aspect of the present invention, there is provided an optical communication system 4. The optical communication system 4 is generally as described with respect to the optical communication system 1 of Figure 1, the first optical circuit 232A of Figure 2 and the first supervisory circuit 332A4 of Figure 3. In contrast, the optical communication system 4 comprises a set of distributed acoustic sensing, DAS, circuits 44, as described below.

In more detail, according to the first aspect of the present invention, there is provided the optical communication system 4 comprising:
an optical transmitter 41 (not shown) and an optical receiver 42 (not shown) mutually optically coupled via an optical fibre cable assembly 43 comprising an optical fibre cable 431 and a set of optical circuits 432, including a first optical circuit 432A comprising a first optical isolator 432A1 (not shown), wherein the optical transmitter 41 is configured to transmit an optical signal S (purple arrows) to the optical receiver 42 via the optical fibre cable assembly 43, wherein the optical receiver 42 is configured to receive the optical signal S transmitted by the optical transmitter 41 via the optical fibre cable assembly 43 and wherein the set of optical circuits 432 is disposed to section the optical fibre cable 431 into a series of optical fibre cable sections 4311, including a first section 4311A and a second section 4311B; and
a set of distributed acoustic sensing, DAS, circuits 44, including a first DAS circuit 44A, wherein the first DAS circuit 44A comprises a first DAS optical transmitter 44A1 (not shown), a first DAS multiplexer / de-multiplexer 44A2 and a first DAS optical receiver 44A3 (not shown);
wherein the first DAS optical transmitter 44A1 is configured to transmit a first DAS optical signal s1 (orange arrows) to the first DAS optical receiver 44A3 via the first section 4311A of the optical fibre cable 431 and via the first DAS multiplexer / de-multiplexer 44A2.

In this example, the optical transmitter 41 and the optical receiver 42 are unidirectionally mutually optically coupled via the optical fibre cable assembly 43. In this example, a wavelength of the optical signal S is in the S-band (i.e. in a wavelength range from 1460 nm to 1530 nm), C-band (i.e. in a wavelength range from 1530 nm to 1565 nm) or L-band (i.e. in a wavelength range from 1565 nm to 1625 nm). In this example, the first section 4311A and the second section 4311B are mutually optically coupled via the first optical circuit 432A.

In this example, the first DAS multiplexer / de-multiplexer 44A2 comprises and/or is a dichroic filter.

In this example, respective wavelengths of the first optical signal S and of the first DAS optical signal s1 are mutually different. In this example, the first DAS optical transmitter 44A1 is configured to transmit the first DAS optical signal s1 to the first DAS optical receiver 44A3 bidirectionally via the first section 4311A of the optical fibre cable 431 and via the first DAS multiplexer / de-multiplexer 44A2. In this example, the first DAS circuit 44A comprises a first retroreflector 44A4 (not shown), configured to reflect the first DAS optical signal s1, transmitted by the first DAS optical transmitter 44A1 via the first section 4311A of the optical fibre cable, to the first DAS optical receiver 44A3 via the first section 4311A of the optical fibre cable. For example, the first DAS optical transmitter 44A1 and the first DAS optical receiver 44A3 may be disposed with the optical transmitter 41 or with the optical transmitter 41 and the first retroflector disposed with and/or included in the first optical circuit 432A or vice versa. For example, the first DAS optical transmitter 44A1 and the first DAS optical receiver 44A3 may be disposed with and/or included in the first optical circuit 432A and the first retroflector disposed with and/or included in a second optical circuit or vice versa.

In this example, the first optical circuit 432A comprises the first DAS multiplexer / de-multiplexer 44A2.

In this example, the first DAS multiplexer / de-multiplexer 44A2 comprises and/or is a wavelength-division multiplexer / de-multiplexer.

In this example, the first optical circuit 432A comprises the first DAS optical transmitter 44A1 and/or the first DAS optical receiver 44A3.

In this example, the first optical circuit 432A comprises the first DAS retroreflector 44A4.

In this example, the first optical circuit 432A comprises a first optical amplifier 432A2 (not shown). In this example, the first optical isolator 432A1 is disposed to protect the first optical amplifier 432A2.

In this example, the first optical circuit 432A comprises a first multiplexer / de-multiplexer 432A3 disposed upstream of the first optical isolator 432A1, for example for multiplexing / de-multiplexing the first optical signal S for optical amplification by a first optical amplifier. In this example, the first multiplexer / de-multiplexer 432A3 comprises and/or is a dichroic filter, an arrayed waveguide grating (AWGN), a chromatic prism or a simple optical filter arrangement. Other multiplexer / de-multiplexers are known.

In this example, the first DAS optical transmitter 44A1 is configured to transmit the first DAS optical signal s1, for example only the first DAS optical signal s1 (i.e. excluding the first optical signal S), to the first DAS optical receiver 44A3 via the first section 4311A of the optical fibre cable, via the first multiplexer / de-multiplexer 432A3 and via the first DAS multiplexer / de-multiplexer 44A2.

In this example, the first optical circuit 432A comprises a first supervisory circuit or part thereof 432A4. In this example, the first supervisory circuit 432A4 comprises a first supervisory optical transmitter and/or a first supervisory optical receiver, wherein the first supervisory optical transmitter is configured to transmit a first supervisory optical signal sS (red arrows) to the first supervisory optical receiver via the first section 4311A and via the first multiplexer / de-multiplexer 432A3 and via the first DAS multiplexer / de-multiplexer 44A2. In this example, respective wavelengths of the first DAS optical signal s1 and of the first supervisory optical signal S are mutually different. In this example, a wavelength of the first optical signal S is inside the S-band, the C-band or the L-band and a wavelength of the first supervisory signal is outside the S-band, the C-band or the L-band, respectively, for example 1480 nm, 1510 nm or 1610 nm.

In this example, the first DAS multiplexer / de-multiplexer is disposed upstream (for example, for the first section 4311A) of the first supervisory circuit 432A4 or part thereof.

In this example, the first DAS multiplexer / de-multiplexer 44A2 is disposed between the first multiplexer / de-multiplexer 432A4 and the first supervisory receiver.

In this example, the set of DAS circuits 44 includes a second DAS circuit 44B, wherein the second DAS circuit 44B comprises a second DAS optical transmitter 44B1, a second DAS multiplexer / de-multiplexer 44B2 and a second DAS optical receiver 44B3;
wherein the first DAS optical transmitter 44A1 is configured to transmit the first DAS optical signal s1 to the first DAS optical receiver 44A3 via the first section 4311A of the optical fibre 431 and via the first DAS multiplexer / de-multiplexer 44A2; and
wherein the second DAS optical transmitter 44B1 is configured to transmit a second DAS optical signal s2 (green arrows) to the second DAS optical receiver 44B3 via the second section 4311B of the optical fibre 431 and via the second DAS multiplexer / de-multiplexer 44B2.

Although this is depicted in the above embodiment as making use of dichroic mirrors, it is appreciated that other means of separating the DAS, supervisory, and communications signals are possible. This may, for example, be achieved using arrayed waveguide gratings (AWGN), chromatic prisms, simple optical filter arrangements, or other ways that are widely disclosed in the open literature.

It will be noted that separate DAS detectors may operate in both the upstream and downstream directions along the same fibre. To effectively separate these, they will preferably use different wavelengths to avoid the signals from interfering along the fibre and to ensure that the reflected DAS signals may be readily distinguished from the transmitted DAS power from the neighbouring amplifier.

Since all of the amplifier configuration disclosed by [1] and indeed all supervisory channels must be separated from the communications channels within the amplifier, this approach can be used to retrospectively add DAS to any optical amplifier.

As an alternative embodiment of this invention, the DAS / OTDR signal (i.e. the first DAS optical signal) could be transmitted with an orthogonal polarisation state to the communications (i.e. the optical signal) and supervisory channels (i.e. the supervisory optical signal). This enables separation of the DAS / OTDR signal through means of polarisation sensitive optics.

As an alternative embodiment, the DAS channels (i.e. the first DAS optical signal) could be transmitted during scheduled gaps in data transfer on one or more data transfer wavelengths (i.e. the optical signal).

As an alternative embodiment the DAS channels (i.e. the first DAS optical signal) could be transmitted during scheduled gaps in supervisory channel transfer of the supervisory channel wavelength(s) (i.e. the supervisory optical signal).

We propose that the DAS electronics processes the signals at the location of the in-line amplifiers, so that the bandwidth required for signalling information to the terminals can be reduced. As shown in Figure 4, signalling could be via the supervisory channel, although additional signalling channels on additional wavelengths could be provided using additional multiplexers and de-multiplexers.

As stated above, the typical distance between optical amplifiers is lower than 100km and existing DAS systems can operate over ranges of 50km, therefore detection over the whole fibre is possible with this invention.

It should be understood that the supervisory channel is not required and alternative embodiments may include the DAS, as described, without a supervisory channel.

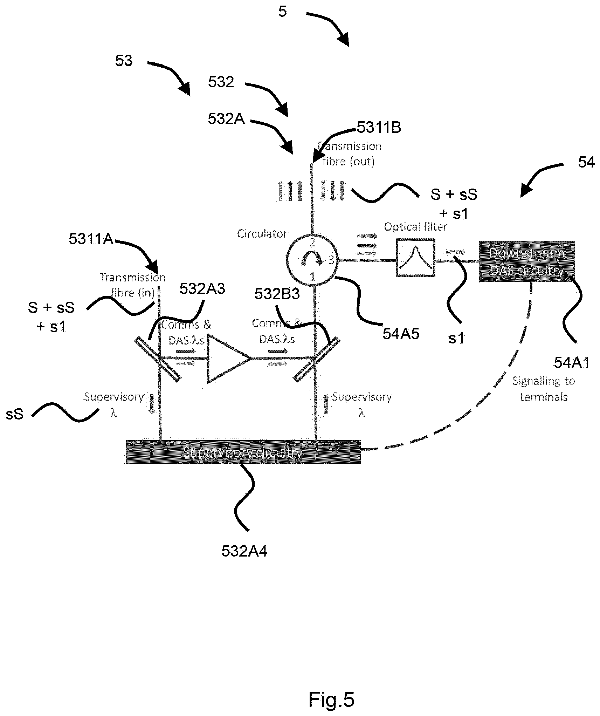

It may alternatively be possible to simplify the embodiment. This is shown in Figure 5. In this alternative embodiment, a DAS wavelength is propagated in the forward direction (downstream) from the terminal that is within the gain bandwidth of the amplifier. A circulator is placed after the output multiplexer in each amplifier. This device passes light travelling forward from port 1 (amplifier) to port 2 (downstream). Light travelling backward passes from port 2 to port 3. Downstream port 3 passes light onto a filter or similar to separate the DAS wavelength for detection. DAS in a forward direction can be achieved at each amplifier with a single source at the terminal. Note the DAS wavelength's power is amplified at each amplifier as it is within the amplifier bandwidth.

In more detail, according to the first aspect of the present invention, there is provided an optical communication system 5. The optical communication system 5 is generally as described with respect to the optical communication system 4. In contrast to the optical communication system 4, the optical communication system 5 additionally and/or alternatively includes a DAS circulator, as described below.

In more detail, according to the first aspect of the present invention, there is provided the optical communication system 5 comprising:
an optical transmitter 51 (not shown) and an optical receiver 52 (not shown) mutually optically coupled via an optical fibre cable assembly 53 comprising an optical fibre cable 531 and a set of optical circuits 532, including a first optical circuit 532A comprising a first optical isolator 532A1 (not shown), wherein the optical transmitter 51 is configured to transmit an optical signal S to the optical receiver 52 via the optical fibre cable assembly 53, wherein the optical receiver 52 is configured to receive the optical signal S transmitted by the optical transmitter 51 via the optical fibre cable assembly 53 and wherein the set of optical circuits 532 is disposed to section the optical fibre cable 531 into a series of optical fibre cable sections 5311, including a first section 5311A and a second section 5311B; and
a set of distributed acoustic sensing, DAS, circuits 54, including a first DAS circuit 54A, wherein the first DAS circuit 54A comprises a first DAS optical transmitter 54A1 (not shown), a first DAS circulator 54A5 and a first DAS optical receiver 54A3 (not shown);
wherein the first DAS optical transmitter 54A1 is configured to transmit a first DAS optical signal s1 to the first DAS optical receiver 54A3 via the first section 5311A or the second section 5311B of the optical fibre cable 531 and via the first DAS circulator 54A5.

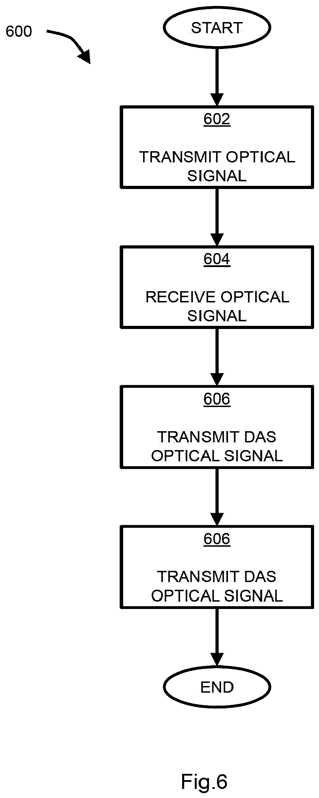

Figure 6 shows a method 600 according to an exemplary embodiment. The method 600 is of monitoring an optical fibre cable assembly, the method comprising:
transmitting, by an optical transmitter, an optical signal to an optical receiver via the optical fibre cable assembly comprising an optical fibre cable and a set of optical circuits, including a first optical circuit comprising a first optical isolator, wherein the set of optical circuits is disposed to section the optical fibre cable into a series of optical fibre cable sections, including a first section and a second section (602);
receiving, by the optical receiver, the optical signal transmitted by the optical transmitter via the optical fibre cable assembly (604);
transmitting, by a first distributed acoustic sensing, DAS, optical transmitter included in a first DAS circuit of a set of DAS circuits, wherein the first DAS circuit comprises the first DAS optical transmitter, a first DAS multiplexer/ de-multiplexer and/or a first DAS circulator and a first DAS optical receiver, a first DAS optical signal to the first DAS optical receiver via the first section or the second section of the optical fibre cable and via the first DAS multiplexer / de-multiplexer and/or the first DAS circulator (606); and
receiving, by the first DAS optical receiver, the first DAS optical signal (608).

### REFERENCES

[1] K. P. Jones, M. P. Poettcker, R. A. Baker, R. M. Gibb, M. E. Bray, B. Flintham, J. Regan, T. J. Reid, A. A. Solheim, R. W. Keys, M. R. Hinds, J. Mun, N. E. Jolley, A. Robinson, J. P. King and S. Parry, "Optical amplifiers". Europe Patent EP1065811A2, 3 January 2001.

## Claims

1. An optical communication system (4, 5) comprising:
an optical transmitter (41, 51) and an optical receiver (42, 52) mutually optically coupled via an optical fibre cable assembly (43, 53) comprising an optical fibre cable (431, 531) and a set of optical circuits (432, 532), including a first optical circuit (432A, 532A) comprising a first optical isolator (432A1, 532A1), wherein the optical transmitter (41, 51) is configured to transmit an optical signal to the optical receiver (42, 52) via the optical fibre cable assembly (43, 53), wherein the optical receiver (42, 52) is configured to receive the optical signal transmitted by the optical transmitter (41, 51) via the optical fibre cable assembly (43, 53) and wherein the set of optical circuits (432, 532) is disposed to section the optical fibre cable (431, 531) into a series of optical fibre cable sections (4311, 5311), including a first section (4311A, 5311A) and a second section (4311B, 5311B); and
a set of distributed acoustic sensing, DAS, circuits (44, 54), including a first DAS circuit (44A, 54A), wherein the first DAS circuit (44A, 54A) comprises a first DAS optical transmitter (44A1, 54A1), a first DAS multiplexer / de-multiplexer (44A2) and/or a first DAS circulator (54A5) and a first DAS optical receiver (44A3, 54A3);
wherein the first DAS optical transmitter (44A1, 54A1) is configured to transmit a first DAS optical signal to the first DAS optical receiver (44A3, 54A3) via the first section (4311A, 5311A) or the second section (4311B, 5311B) of the optical fibre cable (431, 531) and via the first DAS multiplexer / de-multiplexer (44A2) and/or the first DAS circulator (54A5).

2. The optical communication system (4, 5) according to any previous claim, wherein the first optical circuit (432A, 532A) comprises the first DAS multiplexer / de-multiplexer (44A2) and/or the first DAS circulator (54A5).

3. The optical communication system (4, 5) according to any previous claim, wherein the first DAS multiplexer / de-multiplexer (44A2) comprises and/or is a wavelength-division multiplexer / de-multiplexer, a polarization-division multiplexer / de-multiplexer and/or a time-division multiplexer / de-multiplexer.

4. The optical communication system (4, 5) according to any previous claim, wherein the first DAS circuit (44A) comprises a first retroreflector (44A4), configured to reflect the first DAS optical signal, transmitted by the first DAS optical transmitter (44A1, 54A1) via the first section (4311A, 5311A) or the second section (4311B, 5311B) of the optical fibre cable(431, 531), to the first DAS optical receiver (44A3, 54A3) via the first section (4311A, 5311A) or the second section (4311B, 5311B) of the optical fibre cable (431, 531).

5. The optical communication system (4, 5) according to any previous claim, wherein the first optical circuit (44, 54) comprises the first DAS optical transmitter (44A1, 54A1) and/or the first DAS optical receiver (44A3, 54A3).

6. The optical communication system (4, 5) according to any previous claim, wherein the first optical circuit (44, 54) comprises a first optical amplifier (432A2, 532A2).

7. The optical communication system (4, 5) according to any previous claim, wherein the first optical circuit (44) comprises a first multiplexer / de-multiplexer (432A3) disposed upstream or downstream of the first optical isolator (432A1).

8. The optical communication system (4, 5) according to claim 7, wherein the first DAS optical transmitter (44A1, 54A1) is configured to transmit the first DAS optical signal to the first DAS optical receiver (44A3, 54A3) via the first section (4311A, 5311A) or the second section (4311B, 5311B) of the optical fibre cable (431, 531), via the first multiplexer / de-multiplexer (432A3) and via the first DAS multiplexer / de-multiplexer (44A2) and/or the first DAS circulator (54A5).

9. The optical communication system (4, 5) according to any previous claim, wherein the first optical circuit (44, 54) comprises a first supervisory circuit or part thereof (432A4, 532A4).

10. The optical communication system (4, 5) according to claim 8, wherein the first DAS multiplexer / de-multiplexer (44A2) and/or the first DAS circulator (54A5) is disposed upstream or downstream of the first supervisory circuit or part thereof (432A4, 532A4).

11. The optical communication system (4, 5) according to any previous claim, wherein the set of DAS circuits (44, 54) includes a second DAS circuit (44B, 54B), wherein the second DAS circuit (44B, 54B) comprises a second DAS optical transmitter (44B1, 54B1), a second DAS multiplexer / de-multiplexer (44B2) and/or a second DAS circulator (54B5) and a second DAS optical receiver (44B3, 54B3);
wherein the first DAS optical transmitter (44A1, 54A1) is configured to transmit the first DAS optical signal to the first DAS optical receiver (44A3, 54A3) via the first section (4311A, 5311A) of the optical fibre cable (431, 531) and via the first DAS multiplexer / de-multiplexer (44A2) and/or the first DAS circulator (54A5); and
wherein the second DAS optical transmitter (44B1, 54B1) is configured to transmit a second DAS optical signal to the second DAS optical receiver (44B3, 54B3) via the second section (4311B, 5311B) of the optical fibre cable (431, 531) and via the second DAS multiplexer / de-multiplexer (44B2) and/or the second DAS circulator (54B5).

12. The optical communication system (4, 5) according to claim 11, wherein respective wavelengths of the first DAS optical signal and of the second DAS optical signal are mutually different.

13. An optical circuit (432A, 532A) comprising an optical isolator (432A1, 532A1) and a distributed acoustic sensing, DAS, circuit (44A, 54A) comprising a DAS optical transmitter (44A1, 54A1) and/or a DAS optical receiver (44A3, 54A3) and a DAS multiplexer / de-multiplexer (44A2) and/or a DAS circulator (54A5).

14. The optical circuit (432A, 532A) according to claim 13, comprising an optical amplifier (432A2, 532A2), a multiplexer / de-multiplexer (432A3) and/or a supervisory circuit or part thereof (432A4, 532A4).

15. A method (600) of monitoring an optical fibre cable assembly, the method comprising:
transmitting, by an optical transmitter, an optical signal to an optical receiver via the optical fibre cable assembly comprising an optical fibre cable and a set of optical circuits, including a first optical circuit comprising a first optical isolator, wherein the set of optical circuits is disposed to section the optical fibre cable into a series of optical fibre cable sections, including a first section and a second section (602);
receiving, by the optical receiver, the optical signal transmitted by the optical transmitter via the optical fibre cable assembly (604);
transmitting, by a first distributed acoustic sensing, DAS, optical transmitter included in a first DAS circuit of a set of DAS circuits, wherein the first DAS circuit comprises the first DAS optical transmitter, a first DAS multiplexer/ de-multiplexer and/or a first DAS circulator and a first DAS optical receiver, a first DAS optical signal to the first DAS optical receiver via the first section or the second section of the optical fibre cable and via the first DAS multiplexer / de-multiplexer and/or the first DAS circulator (606); and
receiving, by the first DAS optical receiver, the first DAS optical signal (608).
